# EUROPÄISCHE PATENTSCHRIFT

(11) **EP 4 131 071 B1**
(45) Veröffentlichungstag und Bekanntmachung des Hinweises auf die Patenterteilung: **18.02.2026**
(21) Anmeldenummer: 22180576.5
(22) Anmeldetag: 22.06.2022
(51) Int. Cl.: G06K 19/06, G05B 23/02

(54) **TRANSPORTABLE ELEKTRISCHE SCHWEISSMASCHINE,PRODUKTIONSSYSTEM UND VERFAHREN ZUM ERFASSEN VON DATEN**
PORTABLE ELECTRIC WELDING MACHINE, PRODUCTION SYSTEM AND METHOD FOR ACQUIRING DATA
MACHINE A SOUDER ELECTRIQUE, SYSTÈME DE PRODUCTION ET PROCÉDÉ D'ACQUISITION DE DONNÉES

(30) Priorität: 03.08.2021 DE 102021120192
(43) Veröffentlichungstag der Anmeldung: 08.02.2023
(73) Patentinhaber: Illinois Tool Works, Inc., Glenview, Illinois 60025 (US)
(72) Erfinder: OESTRICH, Oliver, Glenview, 60025 (US); FOH, Marcel, Glenview, 60025 (US)
(74) Vertreter: HGF

(56) Entgegenhaltungen:
- EP-A1- 3 339 996
- US-A1- 2015 286 895

## Beschreibung

Die vorliegende Erfindung betrifft eine transportable elektrische Schweißmaschine, ein Produktionssystem mit einer transportablen elektrischen Schweißmaschine und einem mobilen Endgerät sowie ein Verfahren zum Erfassen von Daten.

Aus US 10,010,959 B2 bzw. dem deutschen Gebrauchsmuster DE 20 2012 012 977 U1 geht eine Schweißgerätestromversorgung hervor, welche durch Scannen eines Barcodes oder einer anderen maschinenlesbaren Codierung aufgesetzt werden kann. Bei einer Schweißgerätstromversorgung sind eine Vielzahl konfigurierbarer Parameter einzustellen, um verschiedene Schweißtätigkeiten ausführen zu können. Industrielle Schweißumgebungen sind im Allgemeinen ungeeignet für den Betrieb von herkömmlichen Eingabevorrichtungen, wie eine Maus, eine Tastatur oder andere mechanisch intensive Komponenten. Im Gegensatz zu diesen Vorrichtungen sind Barcodescanner im Allgemeinen hermetisch verschlossen und in der Lage, widrigen Umgebungsbedingungen zu widerstehen. Die derart eingescannten Daten können an einer Anzeigeeinrichtung dargestellt werden.

Aus US 2017/0032281 A1 geht ein Schweißproduktions-Expertensystem hervor, das mit einer Vielzahl von Schweißsystemen verbunden ist. Das Expertensystem kann von einzelnen Schweißsystemen Daten erhalten und diese analysieren. Hierzu sind die einzelnen Schweißsysteme über ein Datennetzwerk mit dem Expertensystem verbunden. Die Schweißsysteme können unterschiedliche Datenschnittstellen (Bluetooth, ZigBee, Sonett, EtherCAT, PROFI-NET, Profibus, DeviceNet, Modbus, P2P oder eine Schnittstelle zu einem anderen standardisierten Netzwerk aufweisen. Die Erfassung von Daten einer Vielzahl unterschiedlicher Schweißsysteme ist sehr vorteilhaft, da je größer die Datenbasis ist, desto besser ist die Analyse des Expertensystems.

Transportable Schweißvorrichtungen werden in unterschiedlichsten Situationen und an unterschiedlichsten Orten eingesetzt. Auf Baustellen ist in der Regel kein Internet verfügbar. Es ist daher schwierig, die einzelnen Schweißvorrichtungen mit einem Server, insbesondere einem Server eines Expertensystems, mit einer Datenleitung zu verbinden.

US 2021/0213553 A1 offenbart eine transportable Schweißvorrichtung, bei der Betriebsdaten drahtlos an ein externes Gerät übertragen werden.

US 2015/286895 A1 beschreibt ein System zur Überwachung von Kaffeemaschinen. Solch eine Kaffeemaschine verfügt über mehrere Sensoren, wie z.B. Temperatursensoren oder Füllstandsensoren. Die Daten aus diesen Sensoren werden von einer elektronischen Einrichtung gesammelt und auf einem Display angezeigt. Die Anzeige auf dem Display erfolgt als Strichcode oder QR-Code. Mithilfe eines Lesegerätes, z.B. eines Smartphones, können diese Daten ausgelesen und an einen Server übertragen werden.

EP 3339996 A1 offenbart ein Gerätesystem mit einen Werkzeug- oder Messgerät. Dieses Werkzeug- bzw. Messgerät zeichnet sich dadurch aus, dass die Kontrolleinrichtung des Gerätesystems einen QR-Code generieren kann, um die aktuellen Daten des Werkzeug- oder Messgeräts und/oder Zusatzinformationen in einem QR-Code verschlüsselt darzustellen.

Der Erfindung liegt deshalb die Aufgabe zugrunde, eine transportable elektrische Schweißmaschine, ein Produktionssystem und ein Verfahren zum Erfassen von Daten zu schaffen, mit welchen auf einfache Art und Weise Schweißdaten erfasst und an einen Server übergeben werden können.

Eine weitere Aufgabe der vorliegenden Erfindung ist es, ein Verfahren zu schaffen, das einfach in bestehenden transportablen Schweißmaschinen nachgerüstet werden kann.

Eine oder mehrere der vorgenannten Aufgaben werden durch die Gegenstände der unabhängigen Patentansprüche gelöst. Vorteilhafte Ausgestaltungen sind in den Unteransprüchen angegeben.

Nach einem ersten Aspekt der vorliegenden Erfindung wird eine transportable elektrische Schweißmaschine nach Anspruch 1 vorgesehen.

Die Schweißmaschine zeichnet sich dadurch aus, dass die Steuereinrichtung ausgebildet ist, die erfassten Daten in einem Datensatz zusammenzufassen und den Datensatz in ein maschinenlesbares Datensatzbild umzusetzen und das Datensatzbild an der Anzeigeeinrichtung darzustellen.

Ein solches maschinenlesbares Datensatzbild kann mittels einer Kamera, insbesondere einem mobilen Endgerät, das eine Kamera aufweist, erfasst werden und an einen Server über eine Datenverbindung übermittelt werden.

Hierdurch können Schweißdaten der transportablen elektrischen Schweißmaschine auch an entlegenen Orten, an welchen kein Datennetzwerk und insbesondere kein Internet vorhanden ist, zuverlässig erfasst werden. Die entsprechenden Daten können beispielsweise auf dem mobilen Endgerät zwischengespeichert werden und wenn sich das mobile Endgerät an einen Ort gebracht wird, an dem ein Datennetz vorhanden ist, dann können die Daten an den entsprechenden Server übermittelt werden.

Die Steuereinrichtung kann derart ausgebildet sein, dass der Datensatz in mehrere Datensatzbilder umgesetzt wird, auf welche die Daten des jeweiligen Datensatzes verteilt sind und die gleichzeitig und/oder aufeinanderfolgend an der Anzeigeeinrichtung dargestellt werden können.

Durch das Aufteilen eines Datensatzes auf mehrere Datensatzbilder können auch Datensätze mit einer Datenmenge, die die Kapazität eines Datensatzbildes überschreitet, übermittelt werden.

Die Schweißmaschine ist vorzugsweise derart ausgebildet, dass zu den mehreren Datensatzbildern jeweils ein Zuordnungscode erzeugt wird, der mit dem jeweiligen Datensatzbild gleichzeitig an der Anzeigeeinrichtung angezeigt wird, so dass die mehreren Datensatzbilder in einer vorbestimmten Ordnung zueinander zuordbar sind. Dieser Zuordnungscode kann in die einzelnen Datensatzbilder integriert oder unabhängig von den Datensatzbildern auf der Anzeigeeinrichtung dargestellt werden. Mit Hilfe des Zuordnungscodes wird sichergestellt, dass bei mehreren Datensatzbildern, die die Daten eines Datensatzes enthalten, diese korrekt miteinander kombiniert werden, so dass die Daten, die in mehreren Datensatzbildern enthalten sind, zuverlässig zu dem jeweiligen Datensatz zusammengesetzt werden können.

Das bzw. die Datensatzbilder werden mit einer maschinenlesbaren Codierung von Daten dargestellt, nämlich einer zweidimensionalen Codierung, nämlich einem QR-Code oder Strichcode. Hierdurch lassen sich größere Datenmengen zuverlässig in einem Datensatzbild darstellen, das geeignet ist, auf einer Anzeigeeinrichtung angezeigt zu werden und mittels einer maschinellen Leseeinrichtung gelesen werden kann. Vorzugsweise ist die maschinenlesbare Codierung standardisiert, so dass zum Erzeugen der Codierung, Abtasten und Lesen der Codierung bzw. Extrahieren der darin enthaltenen Daten am Markt erhältliche Computerprogramme verwendet werden können.

Die maschinenlesbare Codierung kann auch OCR-Schriften umfassen. Hierbei ist es jedoch zweckmäßig, wenn die Daten in einem vorbestimmten Format angeordnet sind, so dass aus die Anordnung der Daten beim Extrahieren und Interpretieren der Daten mit berücksichtigt wird. Z.B. können Daten, die die verwendete Maschine kennzeichnen, wie z.B. die Bezeichnung der Maschine, deren Seriennummer, etc. an einem bestimmten Bereich im Datensatzbild und Messdaten, wie z.B. ein Schweißstrom, Schweißgeschwindigkeit, etc. in einem anderen Bereich des Datensatzbildes angeordnet sein. Dies kann die Extrahierung der Daten aus dem optisch abgetasteten Datensatzbild erheblich vereinfachen. Erfindungsgemäß umfassen die Messdaten die Schweißgeschwindigkeit.

Die Datensatzbilder sind somit speziell aufbereitet, um sie zuverlässig und einfach optisch abtasten und die darin befindlichen Daten wieder extrahieren zu können.

Die Schweißmaschine umfasst einen oder mehrere der folgenden Sensoren zum Überwachen des Schweißprozesses bzw. Schneidprozesses:
- Temperatursensor
- Inertialsensor
- Positionssensor
- optischer Sensor
- Gassensor, insbesondere Sauerstoffsensor
- Strom- und/oder Spannungsmessgerät
- Drahtvorschubsensor.

Vorbestimmte, mit den Sensoren erfasste Daten werden in einem Datensatz zusammengefasst, welcher dann in ein oder mehrere Datensatzbilder umgesetzt werden kann.

Mit einem oder mehreren Temperatursensoren können unterschiedliche Temperaturen während des Schweißprozesses erfasst werden. Bei einem Schweißprozess kann beispielsweise die Temperatur einer vorbestimmten Stelle des Schweißkopfes erfasst werden. Die Temperatur beschreibt die thermische Belastung des Schweißkopfes.

Mit einem Inertialsensor kann die Bewegung eines bestimmten Teils der Schweißmaschine erfasst werden. Bei einer Schneid- oder Schweißmaschine, bei welcher ein Schneid- oder Schweißkopf manuell oder automatisch bewegt wird, kann die Bewegung dieses Kopfes mit dem Inertialsensor erfasst und aufgezeichnet werden.

Es gibt Schweißköpfe, insbesondere bei Orbitalschweißvorrichtungen, bei welchen eine Schweißelektrode automatisch bewegt wird. Die Position der Schweißelektrode bezüglich des übrigen Schweißkopfes kann mittels eines Positionssensors erfasst und aufgezeichnet werden.

Der Schweißprozess kann mit einem optischen Sensor überwacht werden. Üblicherweise wird als optischer Sensor eine Kamera verwendet. Es können jedoch auch nicht-bildgebende optische Sensoren verwendet werden. Mit einem optischen Sensor kann einerseits das zu bearbeitende Produkt oder das Werkzeug, mit dem das Produkt bearbeitet wird, abgebildet werden. Ein optischer Sensor kann jedoch auch zur Spektralanalyse verwendet werden. Hierbei ist es zweckmäßig, wenn der optische Sensor als Farbsensor ausgebildet ist, der Licht in unterschiedlichen Wellenlängen erfassen kann.

Weiterhin kann ein Gassensor vorgesehen sein, der das Vorhandensein eines bestimmten Gases detektiert. Dieser Gassensor kann einerseits als Chemosensor für die Detektion bestimmter gasförmiger Substanzen oder andererseits als Strömungssensor zum Messen der Strömung von Gas, welches von einer bestimmten Gasquelle zugeführt wird, ausgebildet sein.

Der Sensor kann als Strom- und/oder Spannungsmessgerät ausgebildet sein. Dies ist insbesondere bei elektrischen Schweißvorrichtungen zweckmäßig, um den angelegten Schweißstrom zu messen.

Bei einer Schweißmaschine kann auch ein Drahtvorschubsensor vorgesehen sein, mit welcher die Geschwindigkeit gemessen wird, mit der ein Schweißdraht einer Schweißstelle zugeführt wird.

Je nach Art des zu überwachenden Schweißprozesses kann die Art und die Anzahl der Sensoren variieren.

Der Datensatz umfasst in der Regel neben den mit den Sensoren erfassten Daten weitere Daten, zum Beispiel eine Identifikationsnummer der Schweißmaschine, bei einer Schweißvorrichtung die Drahtstärke eines verwendeten Drahtes oder das Material, aus dem der Draht ausgebildet ist oder sonstige Parameter, welche an der Schweißmaschine bekannt sind oder bestimmt werden können, wie z.B. von den Sensorwerten oder sonstigen Werten abgeleitete Parameter.

Nach einem weiteren Aspekt der vorliegenden Erfindung ist ein Produktionssystem nach Anspruch 5 vorgesehen.

Die Erfindung kann auf bestehenden Schweißmaschinen, welche eine Anzeigeeinrichtung aufweisen, die zum Darstellen der Datensatzbilder geeignet ist, nachgerüstet werden, wobei lediglich die Software zu verändern ist und keine Hardware nachzurüsten ist. Mit Verwendung eines mobilen Endgerätes, insbesondere eines handelsüblichen Mobiltelefons, ist es möglich, die an der Schweißmaschine erzeugten Daten an einen Server zu übermitteln. Die Schweißmaschine kann an beliebigen Orten eingesetzt werden. Es ist nicht notwendig, dass an dem jeweiligen Ort ein Datennetzwerk vorhanden ist. Mit dem mobilen Endgerät können die Daten erfasst und dann kann das mobile Endgerät zu einem Ort gebracht werden, an dem eine Verbindung zu einem Datennetzwerk möglich ist, um die Daten an den Server zu übertragen. Die Datensatzbilder bzw. die hieraus extrahierten Daten können am mobilen Endgerät zwischengespeichert werden, bis sie an den Server übertragen werden können.

Mit dem mobilen Endgerät können somit die Datensatzbilder, welche auf der Anzeigeeinrichtung der Schweißmaschine dargestellt werden, erfasst und an einen Server über das Datennetzwerk übermittelt werden. Das mobile Endgerät ist vorzugsweise ein Mobiltelefon. Das mobile Endgerät kann jedoch auch eine andere Vorrichtung sein, welche eine Kamera, einen Mikroprozessor und eine Schnittstelle zu einem Datennetzwerk aufweist. Die Schnittstelle zu einem Datennetzwerk kann eine Mobilfunkschnittstelle gemäß einem Mobilfunkstandard (z.B. 2G, 3G, 4G und/oder 5G) sein. Die Schnittstelle zum Datennetzwerk kann jedoch auch eine Schnittstelle zu einem W-LAN oder zu einem kabelgebundenen Datennetzwerk sein. Vorzugsweise ist das mobile Endgerät ein handelsübliches Mobiltelefon, das mit einem Computerprogramm-Produkt (= App) versehen ist, das zum Erfassen des einen oder der mehreren an einer Anzeigeeinrichtung dargestellten Datensatzbilder und zum Weiterleiten an den Server ausgebildet ist.

Das mobile Endgerät ist vorzugsweise zum Abtasten in vorab festgelegter Weise aufbereiteter Datensatzbilder ausgebildet, so dass die Extraktion der Daten einfach ausgeführt werden kann.

Nach einem weiteren Aspekt der vorliegenden Erfindung kann das mobile Endgerät so ausgebildet sein, dass es auf der Anzeigeeinrichtung der Schweißmaschine dargestellte Daten erfasst und an einen Server weiterleitet. Die Daten müssen hierzu an der Schweißmaschine nicht speziell aufbereitet sein. Das mobile Endgerät ist so ausgebildet, dass es die herkömmlich an der Anzeigeeinrichtung angezeigten Bilder, die die Daten enthalten, erfassen und hieraus die Daten extrahieren. Dies ist aufwendiger als speziell aufbereitete Datensatzbilder zu erfassen, erlaubt jedoch die maschinelle Erfassung der Daten, ohne dass an der Schweißmaschine eine Änderung vorgenommen werden muss. Bei einer solchen Ausführungsform werden in der Regel die erfassten Bilder einem OCR-Prozess unterzogen und die hierdurch gewonnen Rohdaten aufbereitet. Diese Aufbereitung kann mittels einem oder mehrerer Filter erfolgen. Dieser OCR-Prozess und die Aufbereitung der Daten können am mobilen Endgerät und/oder am Server ausgeführt werden.

Das mobile Endgerät ist vorzugsweise derart ausgebildet, dass am mobilen Endgerät mehrere Datensatzbilder, welche Daten eines gemeinsamen Datensatzes enthalten, einander zugeordnet vorgehalten und/oder über das Datennetzwerk übertragen werden und/oder am mobilen Endgerät Daten eines Datensatzes aus einem oder mehreren Datensatzbilder extrahiert und am mobilen Endgerät vorgehalten und/oder über das Datennetzwerk übertragen werden.

Wenn das mobile Endgerät derart ausgebildet ist, dass die Datensatzbilder und/oder die darin enthaltenen Daten in extrahierter Form als Datensätze vorgehalten werden können, dann können mit dem mobilen Endgerät an der Schweißmaschine bzw. Schweißmaschine die Datensatzbilder erfasst werden. Befindet sich die Schweißmaschine an einem Ort, an dem kein Zugang zu dem Datennetzwerk besteht, so können die Datensatzbilder bzw. die darin enthaltenen Daten am mobilen Endgerät solange vorgehalten werden, bis das mobile Endgerät wieder an einen Ort gebracht werden kann, an dem Zugang zum Datennetzwerk besteht. Hierdurch können auch in entlegenen Gegenden die Schweißmaschinen betrieben werden, die entsprechenden Daten zuverlässig erfasst und mit zeitlicher Verzögerung an den Server übermittelt werden. Wenn sich die Schweißmaschine an einem Ort befindet, an dem das mobile Endgerät Zugang zu einem Datennetzwerk hat, dann können die Datensatzbilder und/oder die darin enthaltenen, aus den Datensatzbildern extrahierten Daten unverzüglich nach dem Erfassen von der Anzeigeeinrichtung der Schweißmaschine über das Datennetzwerk an den Server übermittelt werden.

Das mobile Endgerät ist vorzugsweise zum automatischen Erfassen einer Abfolge von Datensatzbildern ausgebildet. Hierzu kann das mobile Endgerät beispielsweise so ausgebildet sein, dass es selbstständig erkennt, wenn sich ein Datensatzbild an der Anzeigeeinrichtung ändert, so dass es dieses erfasst, zwischenspeichert und/oder die darin befindlichen Daten extrahiert und/oder unmittelbar über das Datennetzwerk an den Server leitet. Hierbei können die einzelnen Datensatzbilder mit einzelnen "Standbildern" durch das mobile Endgerät erfasst werden. Es ist jedoch auch möglich, dass das mobile Endgerät aufeinanderfolgend an der Anzeigeeinrichtung dargestellte Datensatzbilder mit einer Filmsequenz aufnimmt, welche dann am mobilen Endgerät und/oder am Server derart analysiert wird, dass die einzelnen Datensatzbilder extrahiert werden.

Die Abfolge der Datensatzbilder bzw. der Daten erfolgt an der Anzeigeeinrichtung bevorzugt mit einer Anzeigefrequenz von mindestens 1Hz, besonders bevorzugt mindestens 16Hz (so schnell, dass sie mit dem bloßen menschlichen Auge nicht erkennbar ist) und ganz besonders bevorzugt mit einer Frequenz nahe oder entsprechend einer Kamerabildfrequenz eines mobilen Endgeräts, z.B. 24-60 Hz oder gar 60Hz bis 240 Hz (Zeitlupenmodus).

Das mobile Endgerät kann auch derart ausgebildet sein, dass mehrere Datensatzbilder automatisch zu einem Datensatz zugeordnet werden. Dies kann beispielsweise durch Erkennen des den jeweiligen Datensatzbildern zugeordneten Zuordnungscode erfolgen, so dass aus einer Vielzahl von Datensatzbildern jeweils diejenigen ausgewählt werden, welche Daten eines Datensatzes enthalten und auch derart zueinander angeordnet werden, so dass die Daten im Datensatz korrekt angeordnet sind. So ist es möglich, mehrere Datensätze aufeinanderfolgend mittels einer Vielzahl von Datensatzbildern zu übertragen.

Ist das mobile Endgerät derart ausgebildet, dass die Daten eines Datensatzes aus einem oder mehreren Datensatzbildern extrahiert werden, dann können auch weitere Daten, die am mobilen Endgerät erfasste werden, dem jeweiligen Datensatz hinzugefügt werden.

Das Produktionssystem ist vorzugsweise derart ausgebildet, dass das mobile Endgerät einen oder mehrere Sensoren aufweist, um vorbestimmte Daten zu erfassen, beispielsweise Geodaten, welche mit einem entsprechenden Geosensor erfasst werden oder Bilddaten, welche mit einer Kamera erfasst werden, und das mobile Endgerät ist ausgebildet, die vorbestimmten Daten dem jeweiligen Datensatz hinzuzufügen.

Das mobile Endgerät kann hierzu einen oder mehrere weitere Sensoren aufweisen, um vorbestimmte Daten zu erfassen. Diese Daten können beispielsweise Geodaten, welche mit einem entsprechenden Geosensor (z.B. GPS), Bilddaten, welche mit einer Kamera erfasst werden oder manuell vom Benutzer eingegebene Daten sein. Das mobile Endgerät kann beispielsweise derart ausgebildet sein, dass der Benutzer nach bestimmten Informationen gefragt wird, die er dann manuell eingeben kann. Die so entweder automatisch und/oder manuell erfassten Daten werden dann dem jeweiligen Datensatz hinzugefügt, bevor sie an den Server übermittelt werden.

Die am mobilen Endgerät erfassten Daten können auch bestimmten Datensatzbildern zugeordnet werden und zusammen mit diesen an den Server übermittelt werden. Am Server werden dann die Daten aus den Datensatzbildern extrahiert und die weiteren am mobilen Endgerät erfassten Daten in den jeweiligen Datensatz integriert.

Nach einem weiteren Aspekt der vorliegenden Erfindung wird ein Verfahren zum Erfassen von Daten nach Anspruch 9 vorgesehen.

Mit diesem Verfahren können auf einfache Art und Weise Schweißdaten, die an einem Schweißprozess einer transportablen Schweißmaschine anfallen, erfasst und an einen Server übermittelt werden. Der Server kann von einer Vielzahl unterschiedlicher Schweißmaschinen die Daten erfassen, auswerten und zur weiteren Bearbeitung zur Verfügung stellen. Der Server kann Bestandteil eines Expertensystems sein. Der Server kann auch ein Cloud-Server sein auf dem die Daten lediglich zwischengespeichert und/oder verarbeitet werden. Ein Expertensystem kann bspw. in einem solchen Cloud-Server integriert sein.

Die hierbei verwendete Schweißmaschine kann der oben erläuterten Schweißmaschine entsprechen. Das hierbei verwendete mobile Endgerät kann dem oben erläuterten mobilen Endgerät entsprechen.

Die Erfindung wird nachfolgend näher anhand der Zeichnungen erläutert. Die Zeichnungen zeigen schematisch in:
- Figur 1: ein Schweißsystem und ein mobiles Endgerät zum Übermitteln der Daten des Schweißsystems an einen Server,
- Figur 2: ein Verfahren zum Erfassen von Daten eines an dem Schweißsystem ausgeführten Schweißprozesses in einem Flussdiagramm,
- Figur 3: einen Datensatz für einen bestimmten Schweißvorgang, und
- Figur 4: einen weiteren Datensatz für einen weiteren Schweißvorgang.

Die Erfindung wird nachfolgend anhand einer Schweißmaschine näher erläutert. Die Schweißmaschine 1 weist eine Basisstation 2 und einen Schweißkopf 3 auf, der mit einem Kabel 11 mit der Basisstation 2 verbunden ist. Der Schweißkopf 3 ist als Orbitalschweißkopf ausgebildet, d.h., ein Schweißkopf, der zum Verbinden zweier Rohrenden mittels einer Schweißverbindung verwendet werden kann. Derartige Schweißmaschinen sind beispielsweise aus der US 2010/0051586 A1 und EP 3 650 157 A1 bekannt. Sie können sowohl im Bereich der Basisstation 2 als auch im Bereich des Schweißkopfes 3 einen oder mehrere Sensoren aufweisen. Die Basisstation 2, welche auch als Schweißstromquelle bezeichnet wird, dient dazu, den Schweißkopf 3 mit Schweißstrom zu versorgen. Die Basisstation 2 weist hierzu ein Strommessgerät auf, um den Schweißstrom zu messen. Am Schweißkopf 3 kann ein Sauerstoffsensor zum Messen des Sauerstoffgehaltes innerhalb einer Schweißkammer, ein Temperatursensor und/oder ein Inertialsensor vorgesehen sein.

Die Basisstation 2 weist eine Anzeigeeinrichtung 4 auf. Die Anzeigeeinrichtung ist vorzugsweise ein Farbbildschirm mit einer Auflösung von zumindest 200 x 150 Bildpunkte und insbesondere 400 x 300 Bildpunkte in einem Format mit dem 4:3 Seitenverhältnis. Es kann jedoch auch Bildschirm mit höherer Auflösung von beispielsweise 800 x 600 Bildpunkten oder 1260 x 1440 Bildpunkten und/oder mit einem anderen Seitenverhältnis wie z.B. 16:9 oder 21:9 vorgesehen sein. Die Anzeigeeinrichtung ist somit eine zweidimensionale Anzeigeeinrichtung, welche zur Darstellung von zweidimensionalen Bildern bzw. grafischen Darstellungen geeignet ist.

Die Basisstation 2 weist eine zentrale Steuereinrichtung auf, welche alle Funktionen der Basisstation 2 steuert. Mit der zentralen Steuereinrichtung können auch einzelne Funktionen des Schweißkopfes 3 angesteuert werden.

Die Basisstation 2 weist eine Speichereinrichtung (nicht dargestellt) auf, in welcher ausführbarer Programmcode und sonstige Daten gespeichert werden können.

Während eines Schweißvorganges werden mit den Sensoren unterschiedlichste Daten erfasst und in der Basisstation 2 und/oder im Schweißkopf 3 gespeichert. Mit der Basisstation 2 kann somit ein Schweißvorgang überwacht werden.

Diese Schweißmaschine 1 ist eine transportable Schweißmaschine, d.h., dass sie an unterschiedlichen Orten zum Schweißen von Rohren eingesetzt werden kann. Die Anzeigeeinrichtung 4 kann beispielsweise auf der Innenseite eines Deckels 5 der Basisstation 2 angeordnet sein. Der Deckel 5 kann zum Transport der Schweißmaschine 1 zugeklappt sein, so dass die Anzeigeeinrichtung 4 geschützt ist.

Die Schweißmaschine 1 ist Bestandteil eines Schweißsystems, das neben der Schweißmaschine 1 noch ein mobiles Endgerät 6 und einen Server 7 umfasst. Das mobile Endgerät und der Server 7 können über ein Datennetzwerk 8 miteinander verbunden werden. Das Datennetzwerk 8 ist üblicherweise das Internet. Es kann jedoch auch ein anderes WAN oder auch ein LAN verwendet werden. Das mobile Endgerät 6 kann auch unmittelbar an den Server 7 mittels einer Datenschnittstelle angeschlossen werden.

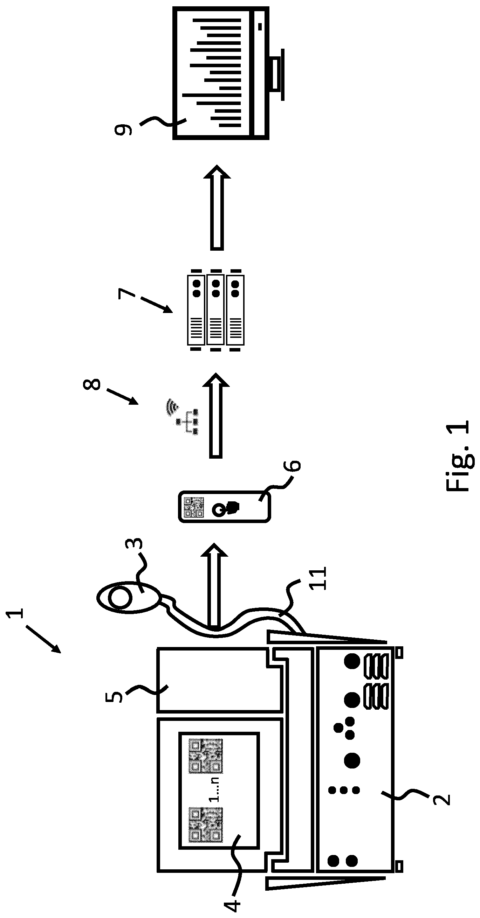

Im vorliegenden Ausführungsbeispiel ist am Server 7 ein Datenanalysesystem ausgebildet, das im vorliegenden Fall ein Expertensystem 9 ist, das von einer Vielzahl von Schweißmaschinen 1 regelmäßig Daten erhält, wie es unten näher erläutert wird. Das Expertensystem 9 analysiert die Daten und erstellt Vorschläge, Steuerungsanweisungen und Schlüsse automatisch, die den Benutzern der Schweißmaschinen 1 bei zukünftigen Schweißvorgängen zur Verfügung gestellt werden. Die Ausgabe des Expertensystems ist in Figur 1 symbolhaft durch einen Bildschirm 9 dargestellt. Die Ausgabe kann über unterschiedlichste Datenkanäle erfolgen. Beispielsweise können die Benutzer der mobilen Endgeräte 6 vom Expertensystem entsprechende Auswerteergebnisse erhalten.

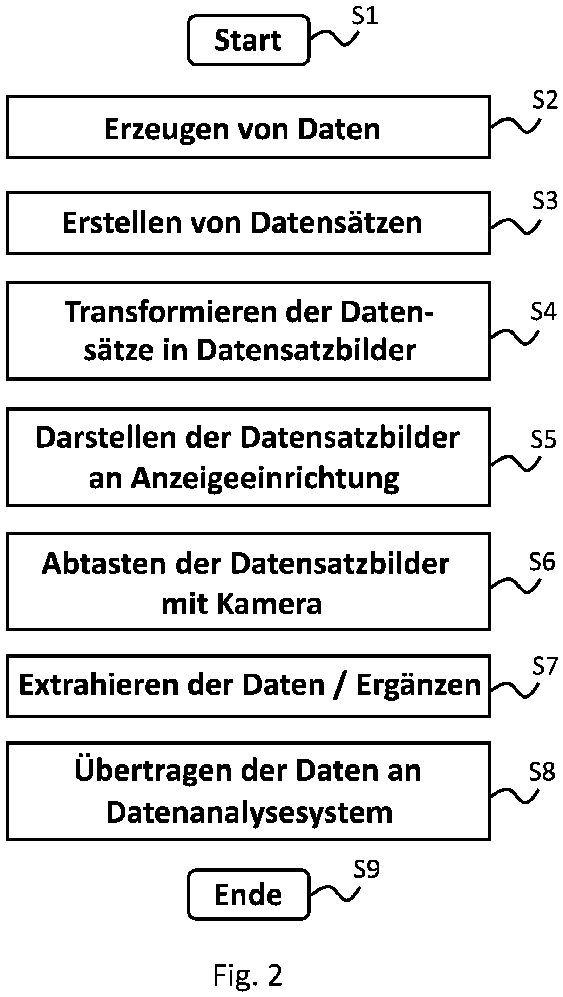

Nachfolgend wird das Verfahren vom Erzeugen von Daten des Schweißprozesses bis zur Übertragung der Daten an den Server 7 bzw. das darin ausgebildete Datenanalysesystem anhand des in Figur 2 dargestellten Flussdiagramms erläutert.

Das Verfahren beginnt mit dem Schritt S1.

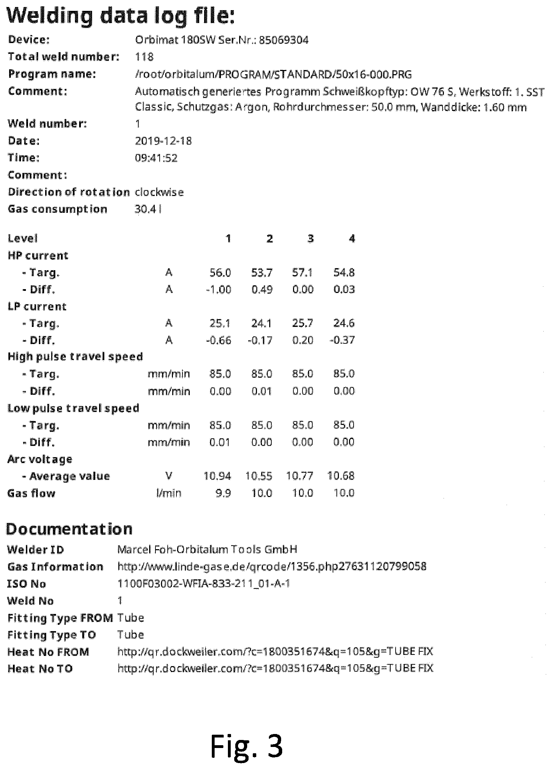

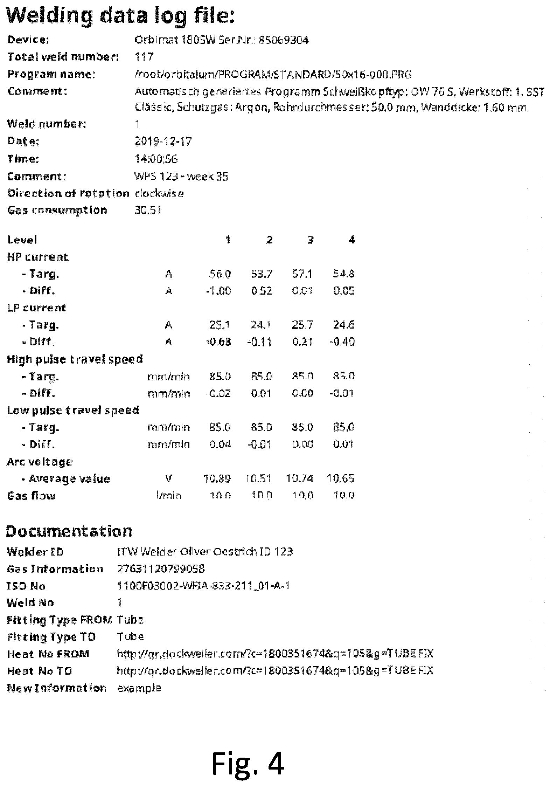

Im Schritt S2 werden bei der Ausführung des Schweißprozesses Daten erzeugt, welche mittels der oben erläuterten Sensoren der Basisstation 2 und/oder des Schweißkopfes 3 erfasst und in der Basisstation 2 und/oder im Schweißkopf 3 gespeichert werden. In der Basisstation 2 wird für einen jeden Schweißvorgang ein Datensatz angelegt, wie er beispielsweise in Figur 3 und Figur 4 gezeigt ist. Dieser Datensatz wird auch als Log-File bezeichnet. Der Datensatz enthält Angaben über die verwendete Schweißmaschine, den Zeitpunkt und Schweißparameter, welche im vorliegenden Ausführungsbeispiel Schweißparameter sind. Im vorliegenden Ausführungsbeispiel umfassen die Schweißparameter Stromwerte eines in Pulsen zugeführten Stromes für HP (high pulse) bzw. LP (low pulse), die Bewegungsgeschwindigkeit der Elektrode, die Schweißspannung und den Gasfluss des Schutzgases.

Die Datensätze enthalten weitere Daten zu der Person, die den Schweißvorgang durchführt, Informationen zum Schweißgas und Parameter zu bestimmten Komponenten der Schweißmaschine 1.

Das Erstellen der Datensätze erfolgt in der Basisstation 2 (Schritt S3).

Die einzelnen Datensätze werden jeweils in ein oder mehrere Datensatzbilder transformiert (Schritt S4). Im vorliegenden Ausführungsbeispiel wird ein standardisierter QR-Code als Datensatzbild verwendet. Im Rahmen der Erfindung sind jedoch anderer Codierungsarten als Datensatzbilder möglich, insbesondere in Form von zweidimensionalen grafischen Darstellungen.

Grundsätzlich ist es auch möglich, den Datensatz in Datensatzbilder umzusetzen, die die Daten in OCR-fähiger Schrift darstellen, wobei ein jedes Datensatzbild eine bestimmte Datenmenge bzw. bestimmte Datenwerte enthält. Eine Codierung des Datensatzes in einer zweidimensionalen grafischen Darstellung, wie bei einem QR-Code, ist jedoch erfindungsgemäß vorgesehen, da auf einer kleinen Fläche komprimiert viel Information dargestellt werden kann und diese zuverlässig abgetastet werden kann.

Bei größeren Datensätzen ist es zweckmäßig, die Daten eines Datensatzes auf mehrere Datensatzbilder zu verteilen und zu jedem Datensatzbild einen Zuordnungscode zu erzeugen. Der Zuordnungscode kann in das jeweilige Datensatzbild integriert sein.

Das bzw. die Datensatzbilder 10 werden an der Anzeigeeinrichtung 4 der Basisstation 2 dargestellt (Schritt S5).

Enthält ein einzelnes Datensatzbild 10 einen vollständigen Datensatz, dann kann das Datensatzbild 10 mit dem mobilen Endgerät 6, das eine Kamera aufweist, abgetastet werden (Schritt S6).

Ist ein Datensatz auf mehrere Datensatzbilder 10 verteilt, so können die mehreren Datensatzbilder 10 entweder gleichzeitig nebeneinander auf der Anzeigeeinrichtung 4 angezeigt werden, wenn diese ausreichend groß ist, oder die einzelnen Datensatzbilder 10, die zu einem Datensatz gehören, werden zeitlich aufeinanderfolgend auf der Anzeigeeinrichtung 4 dargestellt. Die mehreren, zu einem Datensatz gehörenden Datensatzbilder 10 werden vorzugsweise zusammen mit dem jeweiligen Zuordnungscode auf der Anzeigeeinrichtung 4 dargestellt. Der Zuordnungscode kann Bestandteil der Datensatzbilder 10 sein oder zusätzlich zu den Datensatzbildern 10 auf der Anzeigeeinrichtung 4 dargestellt werden. Auch der Zuordnungscode wird mit dem mobilen Endgerät 6 eingelesen und anhand des Zuordnungscodes werden mehrere Datensatzbilder 10 einem bestimmten Datensatz zugeordnet.

Das mobile Endgerät 6 weist eine Speichereinrichtung auf, in welcher das bzw. die mehreren Datensatzbilder 10 gespeichert werden können.

Bei einer bevorzugten Ausführungsform werden die Daten der Datensatzbilder bereits im mobilen Endgerät 6 extrahiert (Schritt S7), um so die Datensätze der Schweißmaschine 1 in ihrer ursprünglichen Form wieder herzustellen. Den am mobilen Endgerät 6 vorliegenden Datensätzen können weitere Informationen hinzugefügt werden. Diese weiteren Informationen können mit am mobilen Endgerät 6 vorgesehenen Sensoren (Kamera, Ortsensor, etc.) oder durch vom Benutzer manuell eingegebene Daten ergänzt werden (Schritt S7).

Die so aufbereiteten Datensätze werden dann über das Datennetzwerk 8 vom mobilen Endgerät 6 auf den Server 7 übertragen (Schritt S8). Diese Übertragung der Daten kann auch mit zeitlicher Verzögerung zum Erfassen der Daten mittels des mobilen Endgerätes 6 an der Basisstation 2 erfolgen. Dies ist dann vor allem zweckmäßig, wenn sich die Schweißmaschine 1 an einem Ort befindet, an dem kein Zugang zum Datennetzwerk 8 besteht. Die Datensatzbilder bzw. Datensätze von mehreren Schweißvorgängen können im mobilen Endgerät 6 zwischengespeichert werden und zu einem späteren Zeitpunkt, an dem sich das mobile Endgerät 6 an einem Ort befindet, an dem ein Zugang zum Datennetzwerk 8 besteht, vom mobilen Endgerät 6 auf den Server übertragen werden.

Am Server 7 werden die Daten der Schweißmaschine 1 ausgewertet und in das Expertensystem eingespielt, das den Benutzern der entsprechenden Schweißmaschine 1 für weitere Schweißvorgänge zur Verfügung steht.

Dieses Verfahren wird mit dem Schritt S9 beendet.

Bei dem oben erläuterten Ausführungsbeispiel werden am mobilen Endgerät die Datensätze aus den Datensatzbildern 10 extrahiert. Im Rahmen der Erfindung ist es auch möglich, die Datensatzbilder im Wesentlichen unverändert vom mobilen Endgerät 6 an den Server 7 zu übertragen und sie dort zu extrahieren. Die Schritte S7 und S8 sind dann vertauscht. Auch den Datensatzbildern 10, welche vom mobilen Endgerät 6 an den Server 7 übertragen werden, können zusätzliche Daten hinzugefügt werden, die dann am Server 7 in die entsprechenden Datensätze eingetragen werden.

Die Erfindung ist oben anhand eines Ausführungsbeispiels einer Schweißmaschine erläutert worden.

Mit der Erfindung ist es möglich, dass an transportablen Schweißmaschinen Daten des Schweißprozesses erfasst und an einen zentralen Server 7 übermittelt werden können, ohne dass die jeweiligen Schweißmaschinen selbst an einem Datennetzwerk angeschlossen werden müssen. Durch die grafische Aufbereitung der Datensätze und das Abtasten der Datensatzbilder mit dem mobilen Endgerät können die Daten aus der Schweißmaschine einfach über ein Datennetzwerk an den zentralen Server 7 übermittelt werden. Die Erfindung kann einfach bei bestehenden Schweißmaschinen, welche eine Anzeigeeinrichtung aufweisen, nachgerüstet werden. Hierbei ist lediglich die Software der Schweißmaschine zu verändern. Es sind keinerlei Hardware-Maßnahmen notwendig. Hierdurch ist es möglich, von einer Vielzahl ähnlicher Schweißmaschinen die Schweißdaten zu erfassen, zentral zusammenzuführen, zentral auszuwerten und hieraus entsprechende Schlüsse, Handlungsanweisungen und dergleichen automatisch zu erzeugen. Man benötigt lediglich an der Schweißmaschine eine geeignete Software zur Darstellung der Daten auf der Anzeigeeinrichtung und am mobilen Endgerät eine geeignete Software (=App) zum Einlesen und Weitergeben der Daten an den Server.

Die Übertragung zwischen dem mobilen Endgerät 6 und dem Server 7 ist vorzugsweise verschlüsselt.

Wenn die Datensätze auf mehrere Datensatzbilder 10 aufzuteilen sind, dann ist vorzugsweise die Software am mobilen Endgerät 6 derart ausgebildet, dass die mehreren Datensatzbilder 10 automatisch aufeinanderfolgend eingelesen und korrekt und in der richtigen Reihenfolge sortiert den jeweiligen Datensätzen zugeordnet werden.

Die Erfindung macht es somit möglich, bestehende Schweißmaschinen, welche an entlegenen Orten verwendet werden, in großer Anzahl auszulesen und in ein gemeinsames Datensystem einzubinden. Hierdurch kann die Qualität des Schweißprozesses erheblich gesteigert werden.

Die Erfindung kann folgendermaßen kurz zusammengefasst werden:
Die vorliegende Erfindung betrifft eine transportable elektrische Schweißmaschine, ein Produktionssystem mit einer transportablen elektrischen Schweißmaschine und einem mobilen Endgerät sowie ein Verfahren zum Erfassen von Daten. Bei der Erfindung werden an der Schweißmaschine Schweißdaten automatisch erfasst, in Datensätzen organisiert und diese in Datensatzbilder umgesetzt, welche an einer Anzeigeeinrichtung dargestellt werden. Die dargestellten Datensatzbilder werden mit einem mobilen Endgerät erfasst und an einen zentralen Server übermittelt. Hierdurch können eine Vielzahl von Schweißmaschinen in ein Datensystem eingebunden werden, ohne dass an den Schweißmaschinen Änderungen an der Hardware notwendig sind.

### Bezugszeichenliste

1 Schweißmaschine
2 Basisstation
3 Schweißkopf
4 Anzeigeeinrichtung
5 Deckel
6 mobiles Endgerät
7 Server
8 Datennetzwerk
9 Bildschirm
10 Datensatzbild
11 Kabel

## Patentansprüche

1. Transportable elektrische Schweißmaschine, mit
einer Basisstation (2),
einem oder mehreren Sensoren zum Überwachen eines Schweißprozesses,
einer Anzeigeeinrichtung, welche zum Anzeigen einer zweidimensionalen graphischen Darstellung ausgebildet ist, und
einer Steuereinrichtung, welche zum Überwachen des Schweißprozesses ausgebildet ist, wobei der eine oder die mehreren Sensoren ausgebildet sind, Daten zu erfassen, die den Schweißprozess beschreiben,
**dadurch gekennzeichnet, dass**
die transportable elektrische Schweißmaschine einen Orbitalschweißkopf (3) umfasst,
die Daten eine Schweißgeschwindigkeit umfassen und
die Steuereinrichtung ausgebildet ist, die erfassten Daten in einen Datensatz zusammenzufassen und den Datensatz in ein maschinenlesbares Datensatzbild umzusetzen und das Datensatzbild als QR-Code oder Strichcode an der Anzeigeeinrichtung darzustellen.

2. Transportable elektrische Schweißmaschine nach Anspruch 1,
**dadurch gekennzeichnet,**
**dass** die Steuereinrichtung ausgebildet ist, den Datensatz in mehrere Datensatzbilder umzusetzen, auf welche die Daten des Datensatzes verteilt sind und die gleichzeitig und/oder aufeinanderfolgend an der Anzeigeeinrichtung dargestellt werden.

3. Transportable elektrische Schweißmaschine nach Anspruch 2, derart ausgebildet, dass zu den mehreren Datensatzbildern jeweils ein Zuordnungscode erzeugt wird, der mit dem jeweiligen Datensatzbild gleichzeitig an der Anzeigeeinrichtung angezeigt wird, so dass die mehreren Datensatzbilder in einer vorbestimmten Ordnung zueinander zuordbar sind.

4. Transportable elektrische Schweißmaschine nach einem der Ansprüche 1 bis 3, **dadurch gekennzeichnet,**
**dass** die Schweißmaschine einen oder mehrere der folgenden Sensoren zum Überwachen des Schweißprozesses umfasst:
- Temperatursensor
- Inertialsensor
- Positionssensor
- optischer Sensor
- Gassensor, insbesondere Sauerstoffsensor
- Strom- und/oder Spannungsmessgerät
- Drahtvorschubsensor

5. Produktionssystem umfassend eine transportable elektrische Schweißmaschine mit
- einer Basisstation (2) und einem Orbitalschweißkopf (3),
- einem oder mehreren Sensoren zum Überwachen eines Schweißprozesses,
- einer Anzeigevorrichtung, welche zum Anzeigen einer zweidimensionalen graphischen Darstellung ausgebildet ist, und
- einer Steuereinrichtung, welche zum Überwachen des Schweißprozesses ausgebildet ist, wobei der eine oder die mehreren Sensoren ausgebildet sind, Daten zu erfassen, die den Schweißprozess beschreiben, wobei die Daten eine Schweißgeschwindigkeit umfassen, wobei die Steuereinrichtung ausgebildet ist, die erfassten Daten in einen Datensatz zusammenzufassen und den Datensatz in ein maschinenlesbares Datensatzbild umzusetzen und das Datensatzbild an der Anzeigeeinrichtung darzustellen,
das Produktionssystem weiter umfassend
ein mobiles Endgerät umfassend eine Kamera, wobei das mobile Endgerät zum Erfassen des an der Anzeigeeinrichtung dargestellten Datensatzbildes ausgebildet ist und das mobile Endgerät eine Schnittstelle zu einem Datennetzwerk aufweist und derart ausgebildet ist, dass über ein Datennetzwerk an einen Server das Datensatzbild und/oder in dem Datensatzbild enthaltene Daten übertragen werden können, und
einen Server, wobei das mobile Endgerät über das Datennetzwerk mit dem Server verbindbar ist, um das Datensatzbild und/oder in dem Datensatzbild enthaltene Daten an den Server zu übertragen.

6. Produktionssystem nach Anspruch 5,
**dadurch gekennzeichnet,**
**dass** das mobile Endgerät derart ausgebildet ist, dass am mobilen Endgerät mehrere Datensatzbilder, welche Daten eines gemeinsamen Datensatzes enthalten, einander zugeordnet vorgehalten und/oder über das Datennetzwerk übertragen werden und/oder am mobilen Endgerät Daten eines Datensatzes aus einem oder mehrerer Datensatzbilder extrahiert und am mobilen Endgerät vorgehalten und/oder über das Datennetzwerk übertragen werden.

7. Produktionssystem nach Anspruch 5 oder 6,
**dadurch gekennzeichnet,**
**dass** das mobile Endgerät zum automatischen Erfassen einer Abfolge von Datensatzbildern ausgebildet ist, und/oder
**dass** das mobile Endgerät zum automatischen Zuordnen mehrerer Datensatzbilder zu einem Datensatz ausgebildet ist.

8. Produktionssystem nach einem der Ansprüche 5 bis 7,
**dadurch gekennzeichnet,**
**dass** das mobile Endgerät einen oder mehrere weitere Sensoren aufweist, um vorbestimmte Daten zu erfassen, beispielsweise Geodaten, welche mit einem entsprechenden Geosensor erfasst werden oder Bilddaten, welche mit einer Kamera erfasst werden, und
das mobile Endgerät ausgebildet ist, die vorbestimmten Daten dem jeweiligen Datensatz hinzuzufügen.

9. Verfahren zum Erfassen von Daten, welche einen Schweißprozess beschreiben, der mit einer transportablen elektrischen Schweißmaschine ausgeführt wird, wobei der Schweißprozess mit Sensoren überwacht wird, wobei die Daten, die den Schweißprozess beschreiben, erzeugt werden, wobei
die Daten für einen bestimmten Schweißprozess bzw. einen bestimmten Abschnitt eines Schweißprozesses jeweils einen Datensatz bilden und die Daten eines Datensatzes in ein oder mehrere maschinenlesbare Datensatzbilder umgesetzt werden und das oder die Datensatzbilder an einer Anzeigeeinrichtung der transportablen elektrischen Schweißmaschine dargestellt und mit einem mobilen Endgerät, das die Anzeigeeinrichtung abtastet, erfasst und vom mobilen Endgerät über ein Datennetzwerk an einen Server übermittelt werden, wobei
eine transportable elektrische Schweißmaschine nach einem der Ansprüche 1 bis 4 und/oder ein Produktionssystem nach einem der Ansprüche 5 bis 8 verwendet wird.

## Claims

1. Portable electric welder, with a base station (2),
one or more sensors for monitoring a welding process, a display device configured for displaying a two-dimensional graphical display, and
a control device configured to monitor the welding process, wherein the one or
more sensors are configured to capture data describing the welding process **characterized in that** the portable electric welder comprises an orbital welding head (3),
the data comprise a welding speed, and the control device is configured to combine the captured data into a data set and translate the data set into a machine-readable data set image, and
display the data set image as a QR code or barcode on the display device.

2. The portable electric welder of claim 1,
**characterized in that** the control device is configured so as to convert the data set into a plurality of data set images, into which the data of the data set are distributed, and which are displayed simultaneously and/or sequentially on the display device.

3. The portable electric welder of claim 2,
configured such that an allocation code is respectively generated for the plurality of data set images and displayed simultaneously with the respective data set image on the display device, such that the plurality of data set images can be allocated to one another in a predetermined order.

4. The portable electric welder of one of claims 1 to 3, **characterized in that**
the welder comprises one or more of the following sensors for monitoring the welding process:
- Temperature sensor
- Inertial sensor
- Position sensor
- Optical sensor
- Gas sensor, in particular oxygen sensor
- Ammeter and/or voltmeter
- Wire feeder sensor.

5. A production system comprising a portable electric welder having
- a base station (2) and an orbital welding head (3),
- one or more sensors for monitoring a welding process,
- a display device suitable for displaying a two-dimensional graphical display,
and
- a control device, which is configured to monitor the welding process, wherein the one or more sensors are configured to collect data which describe the welding process, wherein the data comprises a welding speed, wherein the control device is configured to combine the captured data into a data set, translate the data set into a machine-readable data set image and display the data set image on the display device, the production system further comprising a mobile terminal comprising a camera, wherein the mobile terminal is configured so as to capture the data set image displayed on a display device, and wherein the mobile terminal comprises an interface to a data network, and is configured such that the data set image and/or data contained in the data set image can be transmitted via a data network to a server
a server, wherein the mobile terminal is connectable to the server via the data network to transmit the data set image and/or data included in the data set image to the server.

6. The production system of claim 5, **characterized in that**
the mobile terminal is configured such that a plurality of data set images containing data from a common data set is stored on the mobile terminal while being allocated to one another and/or transmitted via the data network and/or data of a data set is extracted on the mobile terminal from one or more data set images and stored on the mobile terminal and/or transmitted via the data network.

7. The production system of claim 5 or 6, **characterized in that** the mobile terminal is configured so as to automatically capture a sequence of data set images, and/or
the mobile terminal is configured to automatically associate multiple data set images with a data set.

8. The production system of any of claims 5 to 7, **characterized in that** the mobile terminal comprises one or more further sensors to capture predetermined data, for example geodata captured with a corresponding geosensor or image data captured with a camera and the mobile terminal is configured to add the predetermined data to the respective data set.

9. A method for acquiring data describing a welding process, which is carried out with a portable electric welder, wherein the welding process is monitored with sensors, wherein the data describing the welding process is generated, wherein the data form a data set for each specific welding process or specific step of a welding process, and the data of a data set are converted into one or more machine-readable data set images, and the data set image or images is/are displayed on a display device of the portable electric welder and collected with a mobile terminal that scans the display device, then transmitted to a server from the mobile terminal via a data network, wherein a portable electric welder according to any one of claims 1 to 4 and/or a production system according to any one of claims 5 to 8 is used.

## Revendications

1. Machine à souder électrique portable, avec une station de base (2),
un ou plusieurs capteurs pour surveiller un processus de soudage, un dispositif d'affichage configuré pour afficher un affichage graphique bidimensionnel, et
un dispositif de commande configuré pour surveiller le processus de soudage, dans lequel les un ou plusieurs capteurs sont configurés pour capturer des données décrivant le processus de soudage
**caractérisée en ce que** la machine à souder électrique portable comprend une tête de soudage orbital (3),
les données comprennent une vitesse de soudage, et le dispositif de commande est configuré pour combiner les données capturées en un ensemble de données et traduire l'ensemble de données en une image d'ensemble de données lisible par machine, et
afficher l'image d'ensemble de données sous la forme d'un code QR ou d'un code à barres sur le dispositif d'affichage.

2. Machine à souder électrique portable selon la revendication 1,
**caractérisée en ce que** le dispositif de commande est configuré de manière à convertir l'ensemble de données en une pluralité d'images d'ensemble de données, dans lesquelles les données de l'ensemble de données sont distribuées, et qui sont affichées simultanément et/ou séquentiellement sur le dispositif d'affichage.

3. Machine à souder électrique portable selon la revendication 2,
configurée de telle sorte qu'un code d'attribution est respectivement généré pour la pluralité d'images d'ensembles de données et affiché simultanément avec l'image d'ensemble de données respective sur le dispositif d'affichage, de telle sorte que la pluralité d'images d'ensembles de données peuvent être attribuées les unes aux autres dans un ordre prédéterminé.

4. Machine à souder électrique portative selon l'une des revendications 1 à 3, **caractérisée en ce que**
la machine à souder comprend un ou plusieurs des capteurs suivants pour surveiller le processus de soudage :
- Capteur de température
- Capteur inertiel
- Capteur de position
- Capteur optique
- Capteur de gaz, en particulier capteur d'oxygène
- Ampèremètre et/ou voltmètre
- Capteur d'alimentation en fil.

5. Système de production comprenant une machine à souder électrique portable ayant
- une station de base (2) et une tête de soudage orbitale (3),
- un ou plusieurs capteurs pour surveiller un processus de soudage,
- un dispositif d'affichage approprié pour afficher un affichage graphique bidimensionnel, et
- un dispositif de commande, qui est configuré pour surveiller le processus de soudage, dans lequel les un ou plusieurs capteurs sont configurés pour collecter des données qui décrivent le processus de soudage, dans lequel les données comprennent une vitesse de soudage, dans lequel le dispositif de commande est configuré pour combiner les données capturées en un ensemble de données, traduire l'ensemble de données en une image d'ensemble de données lisible par machine et afficher l'image d'ensemble de données sur le dispositif d'affichage, le système de production comprenant en outre
un terminal mobile comprenant une caméra, dans lequel le terminal mobile est configuré de manière à capturer l'image d'ensemble de données affichée sur un dispositif d'affichage, et dans lequel le terminal mobile comprend une interface avec un réseau de données, et est configuré de telle sorte que l'image d'ensemble de données et/ou les données contenues dans l'image d'ensemble de données peuvent être transmises via un réseau de données à un serveur
un serveur, dans lequel le terminal mobile peut être connecté au serveur via le réseau de données pour transmettre l'image d'ensemble de données et/ou les données incluses dans l'image d'ensemble de données au serveur.

6. Système de production selon la revendication 5, **caractérisé en ce que**
le terminal mobile est configuré de telle sorte qu'une pluralité d'images d'ensembles de données contenant des données provenant d'un ensemble de données commun est stockée sur le terminal mobile tout en étant attribuées les unes aux autres et/ou transmises via le réseau de données et/ou des données d'un ensemble de données sont extraites sur le terminal mobile à partir d'une ou de plusieurs images d'ensembles de données et stockées sur le terminal mobile et/ou transmises via le réseau de données.

7. Système de production selon la revendication 5 ou 6, **caractérisé en ce que**
le terminal mobile est configuré de manière à capturer automatiquement une séquence d'images d'ensembles de données, et/ou
le terminal mobile est configuré pour associer automatiquement de multiples images d'ensemble de données à un ensemble de données.

8. Système de production selon l'une quelconque des revendications 5 à 7, **caractérisé en ce que**
le terminal mobile comprend un ou plusieurs capteurs supplémentaires pour capturer des données prédéterminées, par exemple des données géographiques capturées avec un géocapteur correspondant ou des données d'image capturées avec une caméra et le terminal mobile est configuré pour ajouter les données prédéterminées à l'ensemble de données respectif.

9. Procédé d'acquisition de données décrivant un processus de soudage, qui est réalisé avec une machine à souder électrique portable, dans lequel le processus de soudage est surveillé avec des capteurs, dans lequel les données décrivant le processus de soudage sont générées, dans lequel les données forment un ensemble de données pour chaque processus de soudage spécifique ou étape spécifique d'un processus de soudage, et les données d'un ensemble de données sont converties en une ou plusieurs images d'ensemble de données lisibles par machine, et l'image ou les images d'ensemble de données est/sont affichée(s) sur un dispositif d'affichage de la machine à souder électrique portable et collectée(s) avec un terminal mobile qui balaie le dispositif d'affichage, puis transmise(s) à un serveur depuis le terminal mobile via un réseau de données, dans lequel une machine à souder électrique portable selon l'une quelconque des revendications 1 à 4 et/ou un système de production selon l'une quelconque des revendications 5 à 8 sont utilisés.
